# EUROPÄISCHE PATENTANMELDUNG

(11) **EP 0 523 383 A1**
(43) Veröffentlichungstag der Anmeldung: **20.01.1993**
(21) Anmeldenummer: 92110177.0
(22) Anmeldetag: 17.06.1992
(51) Int. Cl.: F16L 3/10

(54) **Rohrstuetze**

(30) Priorität: 05.07.1991 IT MI910620 U
(71) Anmelder: FRATELLI TASSALINI SpA., I-20068 Peschiera Borromeo (IT)
(72) Erfinder: Tassalini, Erminio, Peschiera Borromeo (Mi) (IT); Tassalini, Augusto, Peschiera Borromeo (Mi) (IT)
(74) Vertreter: Jaumann, Paolo

(57) **Zusammenfassung**

Achteckige metallische Rohrstuetze bestehend aus zwei Halbschalen (1, 2), die entweder gelenkartig, oder durch zwei Schrauben miteinander verbunden sind. Innen weist die Roehrstuetze drei bis vier senkrecht zu ihrem inneren Umfang ausgesparte Aushoehlungen oder Oeffnungen (8) auf, die zur Aufnahme von darin eingezwaengten Kunststoffleisten (6) dienen.

## Beschreibung

Die vorliegende Neuerung betrifft eine achteckige metallische Rohrstütze bestehend aus zwei Halbschalen, die an einem Ende über ein Gelenk miteinander verbunden sind, welches eine gegenseitige Schwenkung der Halbschalen um zumindest eine Schwenkachse ermöglicht, und am gegenüberliegendem Ende mit Hilfe einer Spannschraube gegeneinander klemmbar sind, so dass sie in der Lage sind, ein Rohr einzuschliessen und abzustützen; die beiden Halbschalen können aber auch durch zwei Spannschrauben miteinander verbunden sein und dabei die gleiche Aufgabe erfüllen, nämlich ein Rohr einschliessen und abstützen. Sie betrifft insbesondere eine Weiterentwicklung des italienischen Gebrauchsmusters, das mit dem Titel "Reggitubo" am 8. November 1990 unter dem Aktenzeichen 22 071 B/90 hinterlegt wurde.

Eine Aufgabe der Neuerung besteht darin, Ausdehnungen der durch die Rohrstütze getragenen Rohrleitungen zu ermöglichen, wobei diese Ausdehnungen durch Temperaturänderungen des durch die Rohrleitungen fliessenden Mediums verursacht sein können. Neben diesem funktionellen Vorteil verfolgt die Neuerung auch einen Sicherheitszweck, wonach die Rohrleitungen elektrisch isoliert sein sollen.

Die genannten Aufgaben werden neuerungsgemäss im wesentlichen dadurch gelöst, dass die Rohrstütze innen drei bis vier senkrecht zu ihrem inneren Umfang ausgesparte Aushöhlungen oder Öffnungen aufweist, die je nach ihrer Anzahl um 120° bzw. 90° gegeneinander versetzt sind und zur Aufnahme von darin eingezwängten Kunststoffleisten dienen.

Die Anwesenheit eines Kunststoffes an der Innenfläche der Rohrstütze ermöglicht der darin eingeschlossenen Rohrleitung immer dann eine Verschiebung mit minimaler Reibung an der Innenfläche der Rohrstütze, wenn durch Temperaturänderungen des durchfliessenden Mediums hervorgerufene Längenveränderungen der Rohrleitung entstehen.

Der erwähnte, im Innern der Rohrstütze gelagerte Kunststoff gewährleistet darüberhinaus eine sehr gute elektrische Isolierung der Rohrleitungen gegen eventuell vorkommende Streuströme.

In einer bevorzugten Ausführungsform ist die Rohrstütze durch eine achteckige Gestaltung gekennzeichnet, die insbesondere für die funktionellen Eigenschaften der Rohrstütze günstig ist.

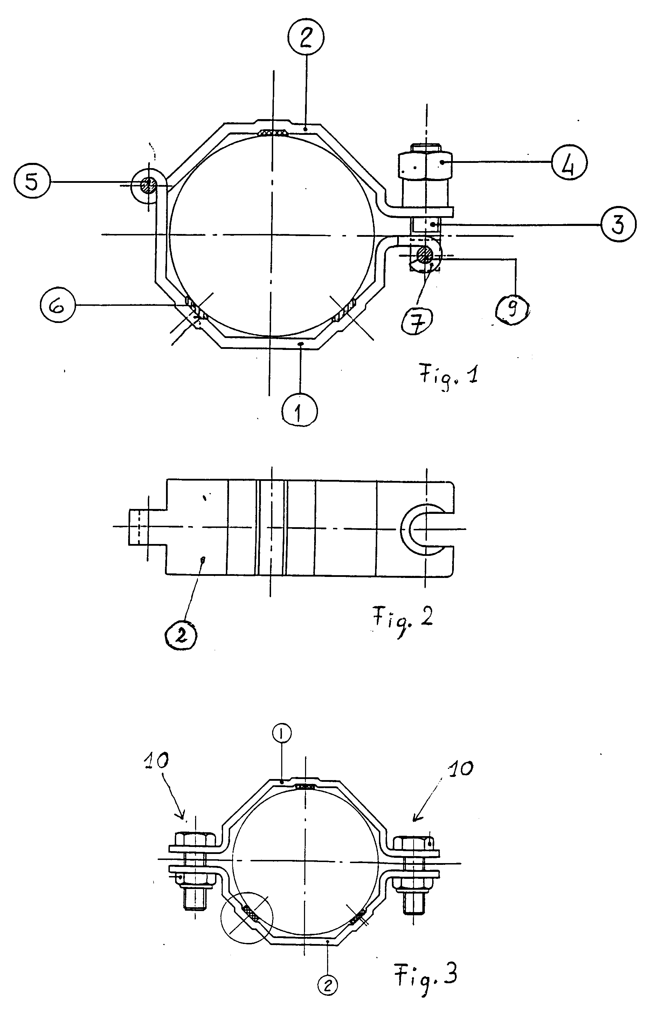

Ausführungsbeispiele für die Rohrstütze, auf welche die Neuerung allerdings nicht beschränkt ist, sind nachstehend anhand der beiliegenden Zeichnungen beschrieben. Dabei bezieht sich das Beispiel nach Figur 1 auf eine Rohrstütze, deren beiden Halbschalen über ein nicht zerlegbares Gelenk miteinander stabil verbunden sind. Ohne den Schutzumfang der Neuerungzu verlassen, kann das Gelenk jedoch auch zerlegbar ausgebildet sein.

In den Zeichungen zeigen:
- Figur 1: ein Ausführungsbeispiel für eine neuerungsgemässe Rohrstütze,
- Figur 2: eine Halbschale der Rohrstütze nach Figur 1, in anderer Ansicht,
- Figur 3: eine Rohrstütze deren beiden Halbschalen durch zwei Schrauben 10 miteinander verbunden sind.

Im Ausführungsbeispiel nach Figur 1 bilden die beiden Halbschalen 1, 2 eine achteckige Rohrstütze.

Das Gelenk für die beiden Halbschalen 1, 2 weist einen Gelenkzapfen 5 auf.

Die Schraube, durch welche die spannseitigen Enden der Halbschalen 1, 2 verbunden sind, besteht in einem Gewindebolzen 4.

Das spannseitige Ende der Halbschale 1 ist in Form einer Aufnahme 7 für einen Zapfen 9 ausgebildet, welcher zusammen mit einem sechseckigen Gewindering 3 einstückig ausgebildet ist, in welchem der Gewindebolzen 4 einschraubbar ist.

Der Zapfen 9 ist in seiner Aufnahme 7 schwenkbar, jedoch axial in Richtung seiner Schwenkachse nicht verschiebbar.

Im Innern weist die Rohrstütze drei Aushöhlungen oder Öffnungen 8 auf, die senkrecht zu ihrem Umfang ausgespart sind. In jeder dieser Aushöhlungen bzw. Öffnungen 8 ist eine Leiste 6 aus Teflon eingezwängt.

## Patentansprüche

1. Metallische Rohrstütze bestehend aus zwei Halbschalen (1, 2), die entweder an einem Ende über ein Gelenk miteinander verbunden sind, welches eine gegenseitige Schwenkung der Halbschalen um zumindest eine Schwenkachse ermöglicht, und am gegenüberliegenden Ende mit Hilfe einer Spannschraube (Gewindebolzen 4) gegeneinander klemmbar sind, oder durch zwei Spannschrauben (10) miteinander verbunden sind, so dass sie in der Lage sind, ein Rohr einzuschliessen und abzustützen, dadurch gekennzeichnet, dass die Rohrstütze innen drei bis vier senkrecht zu ihrem inneren Umfang ausgesparte Aushöhlungen (8) oder Öffnungen aufweist, die zur Aufnahme von darin eingezwängten Kunststoffleisten (6) dienen.

2. Rohrstütze nach Anspruch 1, dadurch gekennzeichnet, dass der Kunststoff für die Leisten (6) mit derartigen Eigenschaften gewählt ist, dass das in der Rohrstütze abgestützte Rohr bei Temperaturänderungen mit geringer Reibung an der Innenfläche der Rohrstütze gleitfähig ist.

3. Rohrstütze nach Anspruch 1, dadurch gekennzeichnet, dass der Kunststoff für die Leisten (6) gute elektrische Isolationseigenschaften aufweist.

4. Rohrstütze nach Anspruch 1, gekennzeichnet durch ihre achteckige Gestaltung.
